# EUROPEAN PATENT SPECIFICATION

(11) **EP 3 722 183 B1**
(45) Date of publication and mention of the grant of the patent: **13.08.2025**
(21) Application number: 20167705.1
(22) Date of filing: 02.04.2020
(51) Int. Cl.: B62D 5/09, B62D 5/04

(54) **STEERING APPARATUS FOR VEHICLES**
LENKVORRICHTUNG FÜR FAHRZEUGE
APPAREIL DE DIRECTION POUR VÉHICULES

(30) Priority: 11.04.2019 IT 201900005582
(43) Date of publication of application: 14.10.2020
(73) Proprietor: OGNIBENE POWER S.P.A., 42124 Reggio Emilia (IT)
(72) Inventor: OGNIBENE, Claudio, 42121 REGGIO EMILIA (IT)
(74) Representative: Corradini, Corrado

(56) References cited:
- WO-A1-2018/042729
- US-A1- 2015 203 150
- US-A1- 2016 149 476
- US-A1- 2017 283 026
- US-A1- 2018 050 724

## Description

### Field of the invention

The present invention relates to a steering apparatus for motor vehicles, in particular for farm vehicles, for example farm tractors or other self-propelled farm machines.

### State of the art

As is well known, farm vehicles are generally equipped with a hydrostatic steering assembly, commonly called hydro steering, which comprises at least one double-action hydraulic jack configured so as to change the orientation of one or more steering elements placed in contact with the ground, typically one or more steering wheels.

The hydraulic jack is supplied with a pressurised operating fluid, typically oil, which is contained inside a reservoir from which it is drawn by means of a pump.

Between the pump and the hydraulic jack is operatively interposed a hydraulic distributor, normally of the rotating type, which can be actuated to address the operator fluid coming from the pump alternatively in one of the two inner chamber of the jack, concurrently putting the other chamber in communication with the reservoir.

In this way, depending on the configuration given to the hydraulic distributor, it is possible to cause a displacement of the piston of the hydraulic jack, to which corresponds a change of the orientation of the steering elements in one direction or in the opposite direction.

The actuation of the hydraulic distributor is carried out by a steering column, which generally has a lower end fastened to the hydraulic distributor and an upper end fastened to a manual steering member, typically a wheel, able to be handled by a driver to cause the rotation of the steering column.

To alleviate the effort required from the driver, or to create particular driving sensations, in the past steering apparatuses were proposed which, in addition to the hydrostatic steering assembly, also comprise and electric servomechanism (EPS).

This electric servomechanism generally comprises an electric motor connected so as to be able to apply a torque to the steering column, and an electronic unit able to control said electric motor, typically controlling the direction and the intensity of the torque generated, based on the angular position of the steering column and/or to the torque imparted by the driver through the steering member. Examples of steering apparatus of this kind are disclosed, for instance, in patent applications US2018/0050724A1, US2017/0283026A1 and US2015/0203150A1.

However, if the electric servomechanism were subjected to a sudden malfunction, for example because of a fault or of a failure, the steering of the vehicle would be entirely performed by the driver, with consequent drastic reduction in efficiency and safety, especially in the case of driving at relatively high speed and/or on rough terrain.

### Description of the invention

In light of the above, an object of the present invention is to provide a steering apparatus able to address the aforementioned drawback of the prior art.

Another object is that of achieving such objective within the context of a simple, rational and relatively cost effective solution.

These and other objects are reached thanks to the characteristics of the invention as set forth in the independent claim 1. The dependent claims outline preferred and/or particularly advantageous aspects of the invention.

In particular, an embodiment of the present invention makes available a steering apparatus for vehicles, preferably for farm vehicles, which comprises:
- a steering column having at least one axis of rotation,
- a manually actuated steering member (e.g. a steering wheel) mechanical connected to one end of the steering column,
- a hydrostatic steering assembly mechanically connected to an opposite end of the steering column and configured to transform a rotation of the steering column around said axis of rotation in a change of an orientation of at least one steering element able to stay in contact with the ground, and
- an electric servomechanism configured to apply to the steering column a torque around said axis of rotation,
wherein said electric servomechanism comprises a first and a second electric motor, each of which is able to apply to the steering column a torque around said axis of rotation independently of the other electric motor.

Thanks to this solution, the electric servomechanism becomes intrinsically redundant so that, if one of the two electric motors stops working or is subjected to a malfunction, the other electric motor can be activated (or remains active), assuring that the steering apparatus as a whole can always continue to operate efficiently even in case of emergency.

According to the present invention, the steering column consists of a single monolithic body or of multiple bodies mutually connected by means of joints that do not allow the selective interruption of the mechanical connection between said bodies.

In practice, the steering column can lack joints, for example friction joints or other types of joints, or any device that can be actuated manually or automatically to interrupt the mechanical connection between the bodies comprising the steering column.

Thanks to this solution, it is assured that, in any condition, there is always a secure mechanical connection between the steering member (e.g. the steering wheel) and the hydrostatic assembly, assuring the possibility of steering the vehicle manually even in the case of failure or malfunction of both electric motors of the electric servomechanism.

According to another aspect of the present invention, the electric servomechanism can comprise a torque sensor able to detect a torque applied to the steering column through the steering member, and an electronic control apparatus connected with said torque sensor and configured to control the first and the second electric motor (for example the direction and the intensity of the torque generated by each of them) on the basis of the signals coming from said torque sensor.

In this way, it is effectively possible to regulate the effect exercised by each motor according to needs.

According to a preferred aspect of the invention, the electronic control apparatus can comprise two distinct control units (ECU), for example two processors or microprocessors, of which a first control unit connected to the torque sensor and configured to control the first electric motor, and a second control unit connected to the torque sensor and configured to control the second electric motor.

According to the invention, the operation of the two electric motors is completely independent of each other, obtaining full redundancy in the electric servomechanism.

According to an aspect of the present invention, the first electric motor comprises
- a rotor having a pre-set axis of rotation,
- a stator that surrounds the rotor, and
- a first set of electric coils arranged on the stator angularly equidistant around the axis of the rotor, each of which defines a phase (or pole) of the first electric motor.

This type of motor has the advantage of having high efficiency and high controllability that make it particularly suitable to be used in the field of assisted steering.

In particular, the first electric motor can be a brushless motor (e.g. a three-phase electric motor) or another motor provided with permanent magnets on the rotor (e.g. an asynchronous motor).

According to the invention, the rotor of the first electric motor is coaxially associated to the steering column and rotatably integral therewith, so as to define therewith a unitary transmission ratio.

For example, the rotor can be directly keyed on the steering column or it can be integrated therein, i.e. a portion of the steering column can serve as a rotor of the first electric motor.

In this way, it is advantageously possible to reduce the dimensions of the steering apparatus.

According to an embodiment of the present invention, the second electric motor can comprise:
- a second set of electric coils arranged on said stator, angularly equidistant around the axis of the rotor and individually interposed between two electric coils of the first set, each of which defines a phase (or pole) of the second electric motor.

Thanks to this solution, the first electric motor and the second electric motor in practice share the same rotor and the same stator, significantly reducing the overall dimensions of the electric servomechanism, while remaining within the scope of a solution wherein the two electric motors (defined by the respective sets of electric coils) can operate and apply torque to the steering column independently.

In other words, this embodiment provides an electric servomechanism provided with a single rotor and with a single stator that serve as rotor and stator for both electric motors, which are distinguished and are made independent of one another by the fact that they comprise respectively the first and the second set of electric coils.

According to a different embodiment of the present invention, the second electric motor could alternatively comprise:
- a second rotor having a pre-set axis of rotation,
- a second stator that surrounds the second rotor, and
- a second set of electric coils arranged on the second stator angularly equidistant around the axis of the second rotor, each of which defines a phase (or pole) of the second electric motor.

In this way, with a generally slightly greater size, it possible to use two substantially standard and, hence, relatively simpler and more economical electric motors.

In particular, the second electric motor can be a brushless motor (e.g. a three-phase brushless motor) or another motor provided with permanent magnets on the rotor (e.g. an asynchronous motor).

In this case, too, the second rotor can be coaxially associated to the steering column and rotatably integral therewith, so as to define therewith a unitary transmission ratio.

For example, the second rotor can be directly keyed on the steering column or it can be integrated therein, i.e. a portion of the steering column can serve as a rotor for an electric servomechanism.

Naturally, the second rotor may be coaxially associated with the steering column in a different axial position with respect to the rotor of the first electric motor.

According to a different aspect of the invention, the hydrostatic steering assembly can comprise:
- a hydraulic actuator, for example a hydraulic jack, mechanically connected with the steering element to cause the steering thereof, and
- a hydraulic distributor, for example a rotary hydraulic distributor, mechanically connected with the steering column and configured to send a flow of a pressurised hydraulic fluid to the hydraulic actuator, as a result of a rotation of the steering column.

This aspect provides a particular effective and efficient solution to make the hydrostatic steering assembly.

Another embodiment of the present invention lastly makes available a vehicle, for example a farm vehicle, comprising the steering apparatus outlined above.

### Brief description of the drawings

Further features and advantages of the invention will be more apparent after reading the following description provided by way of a non-limiting example, with the aid of the accompanying drawings.
Figure 1 is a schematic view of a steering apparatus in accordance with a first embodiment of the invention, in which A and B indicate the two general wiring diagrams respectively of the first motor and of the second motor.
Figure 2 is a schematic view of a steering apparatus in accordance with a second embodiment of the invention, in which C indicates the general wiring diagram respectively of the first motor and of the second motor that share the same rotor and the same stator.

### Detailed description

The aforementioned figures show a steering apparatus 100 for vehicles, in particular for farm vehicles, for example a farm tractor or any other self-propelled farm machine.

The steering apparatus 100 comprises a hydrostatic steering assembly, globally indicated by the numeral 105, which is configured to change the orientation of at least one steering element 110.

The steering element 110 is able to stay in contact with the ground, so as to sustain the weight of the vehicle and to change its direction of travel, according to the orientation assumed.

The steering element 110 can for example be a steering wheel, which is able to roll on the ground, rotating around a substantially horizontal axis, and it is able to vary its own orientation, rotating around a substantially vertical steering axis.

The orientation of the steering wheel can be quantified in terms of a so-called steering angle, i.e. the angle of rotation effected by the steering wheel, around the steering axis, starting from a pre-set reference position.

The hydrostatic steering assembly 105 is configured to cause the rotation of the steering wheel around the steering axis, so as to change the steering angle.

In the example shown, the steering apparatus 100 comprises two of said steering wheels and the hydrostatic steering assembly 105 is configured to change the steering angle of both steering wheels.

The hydrostatic steering assembly 105 can comprise a hydraulic jack 115, which schematically comprises an outer casing 120 of preferably cylindrical shape, and a piston 125 able to divide the inner volume of the outer casing 120 in two separate chambers, of which a first chamber 130 and a second chamber 135.

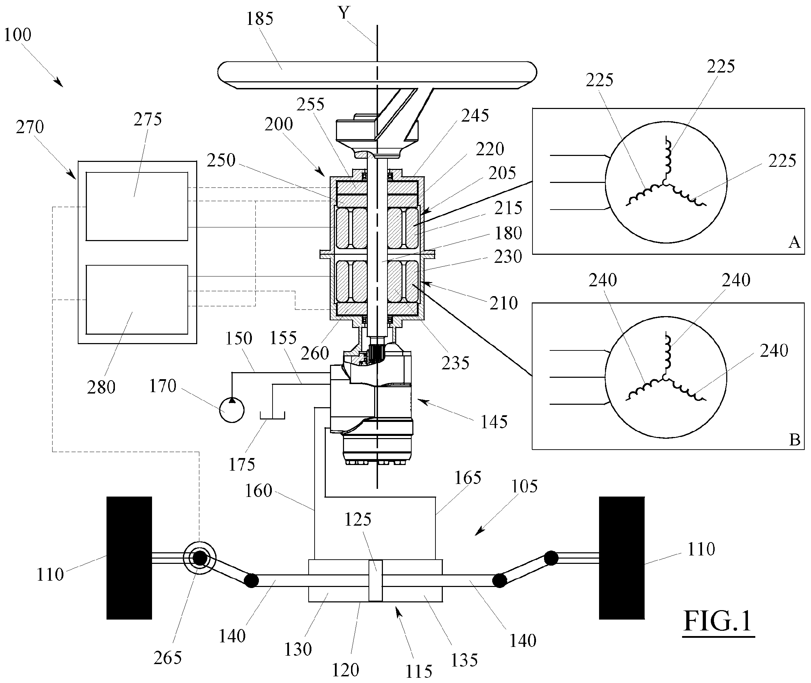

The piston 125 can slide forwards and backwards inside the outer casing 120, preferably in parallel direction to the axis thereof, between a first end stop position (rightwards with respect to the view of figure 1), wherein the volume of the first chamber 130 is maximum and the volume of the second chamber 135 is minimum, and a second end stop position (leftwards with respect to the view of figure 1), wherein the volume of the first chamber 130 is minimum and that of the second chamber 135 is maximum.

To the piston 125 can be connected a stem 140 that, extending parallel to the sliding direction, projects out of the outer casing 120 and is connected to the steering element 110, for example through appropriate lever systems, so that the displacement of said stem 140, due to the sliding of the piston 125, causes a change of the steering angle in one direction or in the opposite direction.

In the example shown, to the piston 125 are connected two of said stems 140, which extend and project from opposite parts of the outer casing 120 and are individually connected to a respective steering element 110.

However, it is not excluded that, in other embodiments, the piston 125 bears a rack gear which, meshing with a pinion, is able to transform the rectilinear motion of the piston 125 into a rotation of the pinion itself, which can in turn be keyed with a shaft that, projecting from the outer casing 120, is connected by means of appropriate lever systems to one or both steering elements 110, so as to transform the rotation of the pinion into a change of the steering angle.

The hydrostatic steering assembly 105 can also comprise a hydraulic distributor 145, which is provided with an inlet duct 150, with a discharge duct 155 and with two supply ducts, of which a first supply duct 160 and a second supply duct 165.

The first supply duct 160 is in communication with the first chamber 130 of the hydraulic jack 115.

The second supply duct 165 is in communication with the second chamber 135 of the hydraulic jack 115.

The inlet duct 150 is connected with the delivery of a hydraulic pump 170, which is able to draw an incompressible operating fluid, typically oil, from a collection reservoir 175 and to send it under pressure in the inlet duct 150.

The discharge duct 155 is in hydraulic communication with said collection reservoir 175. The hydraulic distributor 145 further comprises valve members (not shown in the figure), which can be actuated in at least three configurations, of which a neutral configuration, a first operating configuration and a second operating configuration.

In the neutral configuration, the valve members put in communication the inlet duct 150 directly with the discharge duct 155, preferably closing at the same time both the first and the second supply duct 160 and 165.

In the first operating configuration, the valve members put in communication the inlet duct 150 with the first supply duct 160 and the second supply duct 165 with the discharge duct 155.

In the second operating configuration, the valve members put in communication the inlet duct 150 with the second supply duct 165 and the first supply duct 160 with the discharge duct 155.

In this way, when the valve members are in the first operating configuration, the pressurised operating fluid coming from the pump 170 can flow in the first chamber 130 of the hydraulic jack 115, while the operating fluid contained in the second chamber 135 can flow towards the collecting reservoir 175, causing a displacement of the piston 125 towards the first end stop position (rightwards in figure 1).

When the valve members are in the second operating configuration, the pressurised operating fluid coming from the pump 170 can flow in the second chamber 135 of the hydraulic jack 115, while the operating fluid contained in the first chamber 130 can flow towards the collecting reservoir 175, causing a displacement of the piston 125 towards the second end stop position (leftwards in figure 1).

When the valve members are in the neutral configuration, the pressurised operating fluid coming from the pump 170 can flow directly in the collection reservoir, while the first and the second chamber 130 and 135 of the hydraulic jack 115 can remain closed, assuring that the piston 125 remains stably motionless in the previously reached position. The displacement of the valve members between these three configurations can be driven by a steering column 180, which is able to rotate around a pre-set axis of rotation Y and has a first end mechanically connected to the hydraulic distributor 145 and a second/opposite end mechanically connected to a steering member 185.

In the illustrated embodiment, the steering member 185 is in the form of a steering wheel, which can be coaxially keyed directly to the second end of the steering column 180.

However, in other embodiments, the steering member 185 can be any other member able to be gripped and handled manually by a driver to impart to the steering column 180 a torque able to make it rotate.

In this way, when the steering column 180 is motionless, the valve members of the hydraulic distributor 145 can remain in neutral configuration, when the steering column 180 is rotated in one direction, the valve members can move to the first operating configuration and, when the steering column is rotated in the opposite direction, the valve members can move to the second operating configuration.

In more detail, the hydraulic distributor 145 can be rotary and the valve members can comprise for example two cylinders coaxially inserted one in the other, of which an inner cylinder coaxially keyed to the first end of the steering column 180 and an outer cylinder able to rotate with respect to the inner cylinder for a limited angle in both directions.

When the steering column 180 is motionless, appropriate spring-operated return systems maintain the outer cylinder in a predetermined angular position with respect to the inner cylinder, which corresponds to the neutral configuration of the hydraulic distributor 145.

When the steering column 180 is set in rotation in one direction, the inner cylinder of the hydraulic distributor 145 overcomes the elastic strength of the spring-operated system and performs a small rotation with respect to the outer cylinders, reaching the first operating configuration.

In this way, so long as the steering column 180 is maintained in rotation in said direction, the hydraulic distributor 145 puts in communication the pump 170 with the first chamber 130 of the hydraulic jack 115 and the second chamber 135 with the collecting reservoir 175, causing the sliding of the piston 125 towards the first end stop position.

If the steering column 180 is stopped, the outer cylinder of the hydraulic distributor 145 is brought back to the neutral configuration by the spring-operated system, stopping the sliding of the piston 125.

Reversing the direction of rotation of the steering column 180, the inner cylinder of the hydraulic distributor 145 overcomes the elastic strength of the spring-operated system and performs another small rotation with respect to the outer cylinder, but this time in the opposite direction with respect to the previous case, reaching the second operating configuration.

In this way, so long as the steering column 180 is maintained in rotation in this reverse direction, the hydraulic distributor 145 puts in communication the pump 170 with the second chamber 135 of the hydraulic jack 115 and the first chamber 130 with the collecting reservoir 175, causing the sliding of the piston 125 towards the second end stop position.

As shown in the figures, the steering column 180 can be in the form of a monolithic body, which is able to rotate solely around the axis of rotation Y.

However, in other embodiments, the steering column 180 can comprise multiple parts or separate bodies, which can be mutually connected by means of the appropriate mechanical joints able to transfer the torque from one body to the other.

These mechanical joints can be rigid, for example as a sleeve, a shell or flanged discs, or they can be at least partially elastic, for example with torsion bar.

In some cases it is also possible for the bodies comprising the steering column 180 not to be perfectly aligned but to have mutually inclined axes of rotation and to be connected by means of universal joints or other joints able to allow this non-alignment.

In any case, the mechanical joints do not allow the selective interruption of the mechanical connection between the bodies comprising the steering column 180, so that any torque applied to one of said bodies is always necessary transferred also to all the other bodies and vice versa.

In other words, the steering column 180 is totally free of joints, for example of friction joints or of any other type of joint, which can be driven manually or automatically in at least one configuration in which they are able to interrupt the mechanical connection between two parties or bodies of the steering column 180.

The steering apparatus 100 further comprises an electric servomechanism, indicated globally by the numeral 200, which is configured to apply to the steering column 180 a torque around the axis of rotation Y.

This electric servomechanism 200 comprises two electric motors, of which a first electric motor 205 and a second electric motor 210, each of which is able to apply to the steering column 180 a torque around the axis of rotation Y, independently and autonomously with respect to the other.

The first electric motor 205 can be a brushless motor, for example a three-phase brushless motor.

The first electric motor 205 comprises a stator 215 with substantially annular shape, which surrounds and receives within it a rotor 220 having a pre-set axis of rotation.

In particular, the rotor 220 is coaxially associated and rotatably integral with the steering column 180, so that the axis of rotation of the rotor 220 coincides with the axis of rotation Y of the steering column 180 and that the transmission ratio between the rotor 220 and the steering column 180 is unitary, i.e. that to each rotation of the rotor 220 corresponds an equal rotation of the steering column 180 and vice versa.

For example, the rotor 220 can be shaped as an annular body directly keyed on the steering column 180 or can be integrated therein, or can be made in a single body with the steering column 180 or with a portion thereof.

In any case, the rotor 220 can bear a plurality of permanent magnets, which can be distributed circumferentially around the axis of rotation and angularly equidistant from each other.

The permanent magnets of the rotor 220 can interact with a plurality of electric coils, indicated as 225 in the diagram A, which are installed on the stator 215 and are individually able to define a phase (or pole) of the first electric motor 205.

The electric coils 225 can also be distributed circumferentially around the axis of rotation of the rotor 220, with respect to which they are angularly equidistant from each other.

In the illustrated example, the first electric motor 205 is a three-phase brushless motor and, consequently, it comprises three electric coils 225 angularly separated by 120° from each other.

However, in other embodiments, the first electric motor 205 can have a different number of phases.

In the embodiment illustrated in figure 1, the second electric motor 210 can also be a brushless motor, for example a three-phase brushless motor, altogether similar to the first electric motor 205.

In particular, the second electric motor 210 can comprise a stator 230 with substantially annular shape, which surrounds and receives within it a rotor 235 having a pre-set axis of rotation.

The stator 230 and the rotor 235 of the second electric motor 210 can be physically separate with respect to the stator 215 and to the rotor 220 of the first electric motor 205.

The rotor 235, too, can be coaxially associated and rotatably integral with the steering column 180, so that the axis of rotation of the rotor 235 coincides with the axis of rotation Y of the steering column 180 and that the transmission ratio between the rotor 235 and the steering column 180 is unitary, i.e. that to each rotation of the rotor 235 corresponds an equal rotation of the steering column 180 and vice versa.

For example, the rotor 235 can be shaped as an annular body directly keyed on the steering column 180 or can be integrated therein, or can be made in a single body with the steering column 180 or with a portion thereof.

The rotor 235 of the second electric motor 210 can be associated with the steering column 180 in a different axial position with respect to the rotor 220 of the first electric motor 205, for example between the rotor 220 of the first electric motor 205 and the hydraulic distributor 145.

The rotor 235 can bear a plurality of permanent magnets, which can be distributed circumferentially around the axis of rotation and angularly equidistant from each other.

The permanent magnets of the rotor 235 can interact with a plurality of electric coils, indicated as 240 in the diagram B, which are installed on the stator 230 and are individually able to define a phase (or pole) of the second electric motor 210.

The electric coils 240 can also be distributed circumferentially around the axis of rotation of the rotor 235, with respect to which they are angularly equidistant from each other.

In the illustrated example, the second electric motor 210 is a three-phase brushless motor and, consequently, it comprises three electric coils 240 angularly separated by 120° from each other.

However, in other embodiments, the second electric motor 210 can have a different number of phases.

The stators 215 and 230 of the first and of the second electric motor 205 and 210 can be supported and enclosed within a single outer casing 245, which can be traversed by the steering column 180 and can be fixed to the hydraulic distributor 145 of the hydrostatic steering assembly 105.

The electric servomechanism 200 can further comprise one or more sensors able to measure the operating parameters of the steering apparatus 100.

These sensors can include a torque sensor 250 able to measure the torque applied on the steering column 180 by the driver through the steering member 185.

The torque sensor 250 can be applied to a segment of the steering column 180 between the steering member 185 and the rotor 220 of the first electric motor 205.

The torque sensor 250 can comprise for example a torsion bar able to connect two contiguous portions of the steering column 180 and a sensitive element able to measure the angular phase difference between said two portions.

The sensors can also include at least one position sensor, for example a resolver, which is able to measure the angular position of the steering column 180 with respect to a pre-set initial reference position.

In the example shown, the sensors include two of said position sensors, of which a first position sensor 255 applied to a segment of the steering column 180 between the steering member 185 and the torque sensor 250, and a second position sensor 260 applied to a segment of the steering column 180 between the torque 250 and the hydraulic distributor 145 of the hydrostatic steering assembly 105, specifically between the rotor 235 of the second electric motor 210 and the hydraulic distributor 145.

The torque sensor 250 and the position sensors 255 and 260 can be contained and protected inside the casing 245.

The sensors can further include an angular sensor 265 able to measure the steering angle of at least one of the steering elements 110.

Each sensor is preferably connected with an electronic control apparatus, indicated globally as 270, which is configured to control the first and the second electric motor 205 and 210 on the basis of the signals coming from the sensors.

In particular, the electronic control apparatus 270 is configured to command and control the electric current that is supplied to the electric coils 225 of the first motor 205 and to the electric coils 240 of the second motor 210, so as to impose a direction and an intensity to the torque that each of these electric motors 205 and 210 is able to generate and to apply to the steering column 180.

Preferably, the electronic control apparatus 270 comprises two distinct electronic control units (ECU), for example two processors or microprocessors, of which a first electronic control units 275 configured to control the first electric motor 205, i.e. the electric current that powers the electric coils 225, and a second electronic control unit 280 configured to control the second electric motor 210, i.e. the electric current that powers the electric coils 240.

To do so, the first electronic control unit 275 can be connected with the electric coils 225 and with the torque sensor 250.

The first electronic control unit 275 may be connected also with the angular sensor 265 and/or with at least one of the position sensors 255 and 260, for example with the first position sensor 255.

On the basis of the signals (i.e. of the information) coming from the torque sensor 250, and possibly on the basis of the signal (i.e. of the information) coming from the position sensor and/or from the angular sensor 265, the first electronic control unit 275 can be configured to establish the direction and the intensity of the torque that the first electric motor 205 has to generate and apply to the steering column 180.

On the basis of the direction and of the value of torque thus established, and possibly on the basis of the signals (or of the information) coming from the position sensor, the first electronic control unit 275 can then be configured to supply electric current to the electric coils 225 so as to obtain from the first electric motor 205 a torque having the desired direction and intensity.

Similarly, the second electronic control unit 280 can be connected with the electric coil 240 and with the torque sensor 250.

The second electronic control unit 280 may be connected also with the angular sensor 265 and/or with at least one of the position sensors 255 and 260, for example with the second position sensor 260.

On the basis of the signals (i.e. of the information) coming from the torque sensor 250, and possibly on the basis of the signal (i.e. of the information) coming from the position sensor and/or from the angular sensor 265, the second electronic control unit 280 can be configured to establish the direction and the intensity of the torque that the second electric motor 210 has to generate and apply to the steering column 180.

On the basis of the direction and of the value of torque established, and possibly on the basis of the signals (or of the information) coming from the position sensor, the second electronic control unit 280 can then be configured to supply electric current to the electric coils 240 so as to obtain from the second electric motor 210 a torque having the desired direction and intensity.

Thanks to this solution, the two electric motors 205 and 210 can function in a totally autonomous and mutually independent way.

For example, in normal operating conditions, steering assistance may be provided by the first electric motor 205, whose electronic control unit 275 will power the electric coils 225 in the ways outlined above.

In these conditions, the second electric motor 210 may remain deactivated, i.e. the electric coils 240 may never be powered, so that the second electric motor 210 may not apply any torque to the steering column 180.

The second electric motor 210 may automatically come into operation, according to the procedures outlined above, if the first motor 205 stops operating, for example in case of failure or fault or a failure, assuring electric steering assistance even in case of emergency.

In this way, the second electric motor 210 would represent an element of redundancy that replaces the first electric motor 205 only in case of need.

However, in other embodiments, the first and the second motor 205 and 210 can be reversed, or, in normal operating conditions, both electric motors 205 and 210 can be active concurrently, thereby assuring that, in case of failure or fault of one of the two electric motors, at least the other electric motor can always remain in operation.

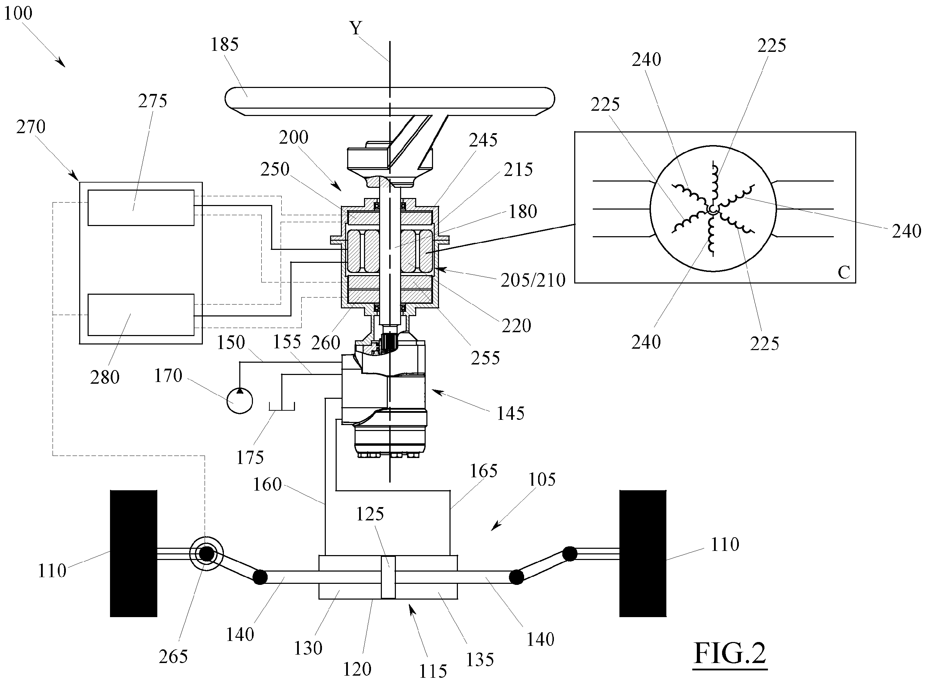

Figure 2 shows a second embodiment of the steering apparatus 100, which differs from the one described previously only by the aspects that are described in detail below.

In this case, the first electric motor 205 and the second electric motor 210 can share the same rotor and the same stator.

More specifically, as in the previous case, the first electric motor 205 can comprise a stator 215 with substantially annular shape, which surrounds and receives within it a rotor 220 having a pre-set axis of rotation.

The rotor 220 can be coaxially associated and rotatably integral with the steering column 180, so that the axis of rotation of the rotor 220 coincides with the axis of rotation Y of the steering column 180 and that the transmission ratio between the rotor 220 and the steering column 180 is unitary, i.e. that to each rotation of the rotor 220 corresponds an equal rotation of the steering column 180 and vice versa.

For example, the rotor 220 can be shaped as an annular body directly keyed on the steering column 180 or can be integrated therein, or can be made in a single body with the steering column 180 or with a portion thereof.

In any case, the rotor 220 can bear a plurality of permanent magnets, which can be distributed circumferentially around the axis of rotation and angularly equidistant from each other.

The permanent magnets of the rotor 220 can interact with a plurality of electric coils, indicated as 225 in the diagram C, which are installed on the stator 215 and are individually able to define a phase (or pole) of the first electric motor 205.

The electric coils 225 can also be distributed circumferentially around the axis of rotation of the rotor 220, with respect to which they are angularly equidistant from each other.

For example, the first electric motor 205 can be a brushless motor, specifically a three-phase brushless motor that comprises three electric coils 225 angularly separated by 120° from each other.

However, in other embodiments, the first electric motor 205 can have a different number of phases.

In this embodiment, the second electric motor 210 can comprise a plurality of electric motor, indicated with the numeral 240 in the diagram C, which are installed on the same stator 215 on which are also installed the electric coils 225 of the first electric motor 205. For example, the electric coils 240 can be distributed circumferentially around the axis of rotation of the rotor 220, with respect to which they are angularly equidistant from each other, and each of them can be angularly interposed and preferably equidistant from two consecutive electric coils 225 of the first motor 205.

The electric coils 240 can interact with the same permanent magnets of the sole rotor 220 and they are individually able to define a phase (or pole) of the second electric motor 210.

The second electric motor 210 can thus be for example a brushless motor, specifically a three-phase brushless motor that comprises three electric coils 240 angularly separated by 120° from each other.

However, in other embodiments, the first electric motor 205 can have a different number of phases.

In practice, on the sole sector 215 can be globally installed a plurality of electric coils arranged circumferentially around the axis of rotation of the sole rotor 220 and angularly equidistant from each other, of which a first set of electric coils 225 that define the phases (or poles) of the first electric motor 205 and a second set of electric coils 240, alternated to the previous ones, that define the phases (or poles) of the second electric motor 210.

In the illustrated example, since the first electric motor 205 and the second electric motors 210 are configured as two three-phase brushless electric motors, on the sole stator 215 is present a set of six electric coils angularly separated by 60° from each other, which define six phases (or poles), of which three phases belong to the first motor 205 and the other three phases, alternated to the previous ones, belong to the second motor 210.

However, in other embodiments, the first and the second electric motor 205 and 210 can have a different number of phases, preferably equal to each other.

The stator 215 can be supported and enclosed within an outer casing 245, which can be traversed by the steering column 180 and can be fixed to the hydraulic distributor 145 of the hydrostatic steering assembly 105.

In this embodiment, too, the electric servomechanism 200 can further comprise one or more sensors able to measure the operating parameters of the steering apparatus 100. These sensors can include a torque sensor 250 able to measure the torque applied on the steering column 180 by the driver through the steering member 185.

The torque sensor 250 can be positioned in a segment of the steering column 180 between the steering member 185 and the sole rotor 220 of the electric servomechanism 200.

The torque sensor 250 can comprise for example a torsion bar able to connect two contiguous portions of the steering column 180 and a sensitive element able to measure the angular phase difference between said two portions.

The sensors can also include at least one position sensor, for example a resolver, which is able to measure the angular position of the steering column 180 with respect to a pre-set initial reference position.

In the example shown, the sensors include two of said position sensors, indicated respectively with the numerals 255 and 260, which can both be applied to a segment of the steering column 180 between the rotor 220 and the hydraulic distributor 145 of the hydrostatic steering assembly 105.

The torque sensor 250 and the position sensors 255 and 260 can be contained and protected inside the casing 245.

The sensors can further include an angular sensor 265 able to measure the steering angle of at least one of the steering elements 110.

Each sensor is preferably connected with an electronic control apparatus, indicated globally as 270, which is configured to control the first and the second electric motor 205 and 210 on the basis of the signals coming from the sensors.

In particular, the electronic control apparatus 270 is configured to command and control the electric current that is supplied to the electric coils 225 of the first motor 205 and to the electric coils 240 of the second motor 210, so as to impose a direction and an intensity to the torque that each of these electric motors 205 and 210 is able to generate and to apply to the steering column 180.

Preferably, the electronic control apparatus 270 comprises two distinct electronic control units (ECU), for example two processors or microprocessors, of which a first electronic control units 275 configured to control the first electric motor 205, i.e. the electric current that powers the electric coils 225, and a second electronic control unit 280 configured to control the second electric motor 210, i.e. the electric current that powers the electric coils 240.

To do so, the first electronic control unit 275 can be connected with the electric coils 225 and with the torque sensor 250.

The first electronic control unit 275 may be connected also with the angular sensor 265 and/or with at least one of the position sensors 255 and 260, for example with the first position sensor 255.

On the basis of the signals (i.e. of the information) coming from the torque sensor 250, and possibly on the basis of the signal (i.e. of the information) coming from the position sensor and/or from the angular sensor 265, the first electronic control unit 275 can be configured to establish the direction and the intensity of the torque that the first electric motor 205 has to generate and apply to the steering column 180.

On the basis of the direction and of the value of torque established, and possibly on the basis of the signals (or of the information) coming from the position sensor, the first electronic control unit 275 can then be configured to supply electric current to the electric coils 225 so as to obtain a torque having the desired direction and intensity.

Similarly, the second electronic control unit 280 can be connected with the electric coil 240 and with the torque sensor 250.

The second electronic control unit 280 may be connected also with the angular sensor 265 and/or with at least one of the position sensors 255 and 260, for example with the second position sensor 260.

On the basis of the signals (i.e. of the information) coming from the torque sensor 250, and possibly on the basis of the signal (i.e. of the information) coming from the position sensor and/or from the angular sensor 265, the second electronic control unit 280 can be configured to establish the direction and the intensity of the torque that the second electric motor 210 has to generate and apply to the steering column 180.

On the basis of the direction and of the value of torque established, and possibly on the basis of the signals (or of the information) coming from the position sensor, the second electronic control unit 280 can then be configured to supply electric current to the electric coils 240 so as to obtain a torque having the desired direction and intensity.

Thanks to this solution, although the two electric motors 205 and 210 share the same rotor 220 and the same stator 215, can function in a totally autonomous and mutually independent way.

For example, in normal operating conditions, steering assistance may be provided only by the first electric motor 205, whose electronic control unit 275 will power the electric coils 225 in the ways outlined above.

In these conditions, the second electric motor 210 may be deactivated, i.e. the electric coils 240 may never be powered, so that the second electric motor 210 may not apply any torque to the steering column 180.

The second electric motor 210 may automatically come into operation, according to the procedures outlined above, if the first motor 205 stops operating, for example in case of failure or fault or a failure, assuring electric steering assistance even in case of emergency.

In this way, the second electric motor 210 would represent in practice an element of redundancy that replaces the first electric motor 205 only in case of need.

However, in other embodiments, the first and the second motor 205 and 210 can be reversed, or, in normal operating conditions, both electric motors 205 and 210 can be active concurrently, thereby assuring that, in case of failure or fault of one of the two electric motors, at least the other electric motor can always remain in operation.

Although the previous description always refers in particular to brushless motors, in other embodiments the first and the second motor 205 and 210 can be motors of other types, for example electric motors having permanent magnets on the rotor, for example asynchronous motors.

Obviously, an expert in the field may make several technical-applicative modifications to all that above, without departing from the scope of the invention as hereinbelow claimed.

## Claims

1. A steering apparatus (100) for vehicles, which comprises:
- a steering column (180) having at least one axis of rotation (Y),
- a manually actuated steering member (185) mechanical connected to one end of the steering column (180),
- a hydrostatic steering assembly (105) mechanically connected to an opposite end of the steering column (180) and configured to transform a rotation of the steering column (180) around said axis of rotation (Y) in a change of an orientation of at least one steering element (110) able to stay in contact with the ground, and
- an electric servomechanism (200) configured to apply to the steering column (180) a torque around said axis of rotation (Y),
wherein said electric servomechanism (200) comprises a first and a second electric motor (205, 210), each of which is able to apply to the steering column (180) a torque around said axis of rotation (Y) independently of the other electric motor,
wherein the first electric motor (205) comprises:
- a rotor (220) having a pre-set axis of rotation (Y),
- a stator (215) that surrounds the rotor (220), and
- a first set of electric coils (225) arranged on the stator (215) angularly equidistant around the axis (Y) of the rotor (220), each of which defines a phase of the first electric motor (205),
wherein the rotor (220) is coaxially associated to the steering column (180) and rotatably integral therewith, so as to define therewith a unitary transmission ratio,
**characterised in that** the steering column (180) consists of a single monolithic body or of multiple bodies mutually connected by means of joints that do not allow the selective interruption of the mechanical connection between said bodies.

2. A steering apparatus (100) according to claim 1, wherein the electric servomechanism (200) comprises a torque sensor (250) able to detect a torque applied to the steering column (180) through the steering member (185), and an electronic control apparatus (270) connected with said torque sensor (250) and configured to control the first and the second electric motor (205, 210) on the basis of the signals coming from said torque sensor (250).

3. A steering apparatus (100) according to any one of the preceding claims, wherein the electronic control apparatus (270) comprises two distinct control units, of which a first control unit (275) connected to the torque sensor (250) and configured to control the first electric motor (205), and a second control unit (280) connected to the torque sensor (250) and configured to control the second electric motor (210).

4. A steering apparatus (100) according to any one of the preceding claims, wherein the second electric motor (210) comprises:
- a second set of electric coils (240) arranged on said stator (215), angularly equidistant around the axis (Y) of the rotor (220) and individually interposed between two electric coils (225) of the first set, each of which defines a phase of the second electric motor (210).

5. A steering apparatus (100) according to any one of the claims from 1 to 4, wherein the second electric motor (210) comprises:
- a second rotor (235) having a pre-set axis of rotation (Y),
- a second stator (230) that surrounds the second rotor (235), and
a second set of electric coils (240) arranged on the second stator (235) angularly equidistant around the axis (Y) of the second rotor (235), each of which defines a phase of the second electric motor (210).

6. A steering apparatus (100) according to claim 5, wherein the second rotor (235) is coaxially associated to the steering column (180) and rotatably integral therewith, so as to define therewith a unitary transmission ratio.

7. A steering apparatus (100) according to any one of the preceding claims, wherein the hydrostatic steering assembly (105) comprises:
- a hydraulic actuator (115) mechanically connected with the steering element (110) to cause the steering thereof, and
- a hydraulic distributor (145) mechanically connected with the steering column (180) and configured to send a flow of a pressurised hydraulic fluid to the hydraulic actuator (115), as a result of a rotation of the steering column (180).

## Patentansprüche

1. Lenkvorrichtung (100) für Fahrzeuge, die Folgendes umfasst:
- eine Lenksäule (180), die mindestens eine Drehachse (Y) aufweist,
- ein manuell betätigtes Lenkorgan (185), das mechanisch mit einem Ende der Lenksäule (180) verbunden ist,
- eine hydrostatische Lenkanordnung (105), die mechanisch mit einem gegenüberliegenden Ende der Lenksäule (180) verbunden und konfiguriert ist, um eine Drehung der Lenksäule (180) um die Drehachse (Y) in eine Änderung einer Ausrichtung mindestens eines Lenkelements (110) umzuwandeln, das in der Lage ist, in Kontakt mit dem Boden zu bleiben, und
- einen elektrischen Servomechanismus (200), der konfiguriert ist, um ein Drehmoment um die genannte Drehachse (Y) auf die Lenksäule (180) auszuüben,
**dadurch gekennzeichnet, dass** der elektrische Servomechanismus (200) einen ersten und einen zweiten Elektromotor (205, 210) umfasst, wovon jeder in der Lage ist, unabhängig von dem anderen Elektromotor ein Drehmoment um die Drehachse (Y) auf die Lenksäule (180) auszuüben,
wobei der erste Elektromotor (205) Folgendes umfasst:
- einen Rotor (220), der eine voreingestellte Drehachse (Y) aufweist,
- einen Stator (215), der den Rotor (220) umgibt, und
- einen ersten Satz elektrischer Spulen (225), die in gleichem Winkelabstand um die Achse (Y) des Rotors (220) auf dem Stator (215) angeordnet sind und wovon jede eine Phase des ersten Elektromotors (205) definiert,
wobei der Rotor (220) koaxial mit der Lenksäule (180) assoziiert und drehbar einstückig damit ist, um damit ein einheitliches Übersetzungsverhältnis zu definieren, **dadurch gekennzeichnet, dass** die Lenksäule (180) aus einem einzigen monolithischen Körper oder aus mehreren Körpern besteht, die mittels Verbindungen miteinander verbunden sind, die eine selektive Unterbrechung der mechanischen Verbindung zwischen den Körpern nicht zulassen.

2. Lenkvorrichtung (100) nach Anspruch 1, wobei der elektrische Servomechanismus (200) einen Drehmomentsensor (250), der in der Lage ist, ein Drehmoment zu erfassen, das über das Lenkorgan (185) auf die Lenksäule (180) angewandt wird, und eine elektronische Steuervorrichtung (270) umfasst, die mit dem Drehmomentsensor (250) verbunden und konfiguriert ist, um den ersten und den zweiten Elektromotor (205, 210) basierend auf den Signalen zu steuern, die von dem Drehmomentsensor (250) kommen.

3. Lenkvorrichtung (100) nach einem der vorherigen Ansprüche, wobei die elektronische Steuervorrichtung (270) zwei separate Steuereinheiten umfasst, wovon eine erste Steuereinheit (275) mit dem Drehmomentsensor (250) verbunden und konfiguriert ist, um den ersten Elektromotor (205) zu steuern, und eine zweite Steuereinheit (280) mit dem Drehmomentsensor (250) verbunden und konfiguriert ist, um den zweiten Elektromotor (210) zu steuern.

4. Lenkvorrichtung (100) nach einem der vorherigen Ansprüche, wobei der zweite Elektromotor (210) Folgendes umfasst:
- einen zweiten Satz elektrischer Spulen (240), die in gleichem Winkelabstand um die Achse (Y) des Rotors (220) und einzeln eingefügt zwischen zwei elektrischen Spulen (225) des ersten Satzes, wovon jede eine Phase des zweiten Elektromotors (210) definiert, auf dem Stator (215) angeordnet sind.

5. Lenkvorrichtung (100) nach einem der Ansprüche 1 bis 4, wobei der zweite Elektromotor (210) Folgendes umfasst:
- einen zweiten Rotor (235), er eine voreingestellte Drehachse (Y) aufweist,
- einen zweiten Stator (230), der den zweiten Rotor (235) umgibt, und
einen zweiten Satz elektrischer Spulen (240), die in gleichem Winkelabstand um die Achse (Y) des zweiten Rotors (235) auf dem zweiten Stator (235) angeordnet sind und wovon jede eine Phase des zweiten Elektromotors (210) definiert.

6. Lenkvorrichtung (100) nach Anspruch 5, wobei der zweite Rotor (235) koaxial mit der Lenksäule (180) assoziiert und drehbar damit integriert ist, um damit ein einheitliches Übersetzungsverhältnis zu definieren.

7. Lenkvorrichtung (100) nach einem der vorherigen Ansprüche, wobei die hydrostatische Lenkanordnung (105) Folgendes umfasst:
- einen hydraulischen Aktuator (115), der mechanisch mit dem Lenkelement (110) verbunden ist, um dessen Lenken zu bewirken, und
- einen hydraulischen Verteiler (145), der mechanisch mit der Lenksäule (180) verbunden und konfiguriert ist, um als Resultat einer Drehung der Lenksäule (180) einen Strom eines unter Druck stehenden Hydraulikfluids an den hydraulischen Aktuator (115) zu senden.

## Revendications

1. Appareil de direction (100) pour véhicules, comprenant :
- une colonne de direction (180) ayant au moins un axe de rotation (Y),
- un élément de direction à actionnement manuel (185) connecté de manière mécanique à une extrémité de la colonne de direction (180),
- un système de direction hydrostatique (105) connecté de manière mécanique à une extrémité opposée de la colonne de direction (180) et configuré pour transformer une rotation de la colonne de direction (180) autour dudit axe de rotation (Y) en un changement d'orientation d'au moins un élément de direction (110) capable de rester en contact avec le sol, et
- un servomécanisme (200) configuré pour appliquer à la colonne de direction (180) un couple autour dudit axe de rotation (Y),
dans lequel ledit servomécanisme électrique (200) comprend un premier et un deuxième moteur électrique (205, 210), chacun d'eux étant capable d'appliquer à la colonne de direction (180) un couple autour dudit axe de rotation (Y) indépendamment de l'autre moteur électrique, dans lequel le premier moteur électrique (205) comprend :
- un rotor (220) ayant un axe de rotation préréglé (Y),
- un stator (215) qui entoure le rotor (220), et
- un premier ensemble de bobines électriques (225) disposées sur le stator (215), à égale distance angulaire autour de l'axe (Y) du rotor (220), chacune définissant une phase du premier moteur électrique (205), le rotor (220) étant associé de manière coaxiale à la colonne de direction (180) et intégré en rotation à celle-ci, de manière à définir un rapport de transmission unitaire, **caractérisé en ce que** la colonne de direction (180) est constituée d'un seul corps monolithique ou de plusieurs corps connectés mutuellement par des articulations qui ne permettent pas d'interrompre de manière sélective la liaison mécanique entre lesdits corps.

2. Appareil de direction (100) selon la revendication 1, dans lequel le servomécanisme électrique (200) comprend un capteur de couple (250) capable de détecter un couple appliqué à la colonne de direction (180) par l'intermédiaire de l'élément de direction (185), et un appareil de commande électronique (270) connecté audit capteur de couple (250) et configuré pour commander le premier et le deuxième moteur électrique (205, 210) sur la base des signaux provenant dudit capteur de couple (250).

3. Appareil de direction (100) selon l'une quelconque des revendications précédentes, dans lequel l'appareil de commande électronique (270) comprend deux unités de commande distinctes, dont une première unité de commande (275) connectée au capteur de couple (250) et configurée pour commander le premier moteur électrique (205), et une deuxième unité de commande (280) connectée au capteur de couple (250) et configurée pour commander le deuxième moteur électrique (210).

4. Appareil de direction (100) selon l'une quelconque des revendications précédentes, dans laquelle le deuxième moteur électrique (210) comprend :
- un deuxième ensemble de bobines électriques (240) disposées sur ledit stator (215), à égale distance angulaire autour de l'axe (Y) du rotor (220) et interposées individuellement entre deux bobines électriques (225) du premier ensemble, chacune d'entre elles définissant une phase du deuxième moteur électrique (210).

5. Appareil de direction (100) selon l'une quelconque des revendications 1 à 4, dans laquelle le deuxième moteur électrique (210) comprend :
- un deuxième rotor (235) ayant un axe de rotation préréglé (Y),
- un deuxième stator (230) qui entoure le deuxième rotor (235), et un deuxième ensemble de bobines électriques (240) disposées sur le deuxième stator (235), à égale distance angulaire autour de l'axe (Y) du deuxième rotor (235), chacune d'entre elles définissant une phase du deuxième moteur électrique (210).

6. Appareil de direction (100) selon la revendication 5, dans lequel le deuxième rotor (235) est associé de manière coaxiale à la colonne de direction (180) et intégré en rotation de celle-ci, de manière à définir avec celle-ci un rapport de transmission unitaire.

7. Appareil de direction (100) selon l'une quelconque des revendications précédentes, dans lequel le système de direction hydrostatique (105) comprend :
- un actionneur hydraulique (115) connecté de manière mécanique à l'élément de direction (110) pour entraîner la direction de celui-ci, et
- un distributeur hydraulique (145) connecté de manière mécanique à la colonne de direction (180) et configuré pour envoyer un flux de fluide hydraulique sous pression à l'actionneur hydraulique (115), à la suite d'une rotation de la colonne de direction (180).
